# EUROPÄISCHE PATENTSCHRIFT

(11) **EP 0 383 227 B1**
(45) Veröffentlichungstag und Bekanntmachung des Hinweises auf die Patenterteilung: **12.05.1993**
(21) Anmeldenummer: 90102707.8
(22) Anmeldetag: 12.02.1990
(51) Int. Cl.: C10L 5/48, C22B 1/248, C22B 1/00

(54) **Verfahren zum Binden von partikelförmigen Abfällen, wie Stäube, Metallabfälle, Fasern, Papierabfällen od. dgl., zu Feststoffen**
Process for binding particulate waste such as dusts, metal waste, fibres, paper waste or the like
Procédé pour lier des déchets particulaires comme de la poussière, déchets de métaux, fibres, déchets de papier en matière solide

(30) Priorität: 13.02.1989 DE 3904244; 26.10.1989 DE 3935715
(43) Veröffentlichungstag der Anmeldung: 22.08.1990
(73) Patentinhaber: Schraufstetter, Wilfried, D-85737 Ismaning (DE); Gastinger, Dieter, D-81249 München (DE)
(72) Erfinder: Schraufstetter, Wilfried, D-85737 Ismaning (DE); Gastinger, Dieter, D-81249 München (DE)
(74) Vertreter: Lesser, Karl-Bolko, Dipl.-Ing.

(56) Entgegenhaltungen:
- EP-A- 0 262 083
- EP-A- 0 288 150
- AT-A- 378 200
- DE-A- 2 539 195
- DE-C- 586 159
- GB-A- 1 434 406

## Beschreibung

Die Erfindung betrifft ein Verfahren zum Binden von partikelförmigen Abfällen, wie Stäube, Metallabfälle, Fasern, Papierabfällen od.dgl., zu Feststoffen.

Partikelförmige Abfälle, wie z.B. Filterstäube, die heutzutage insbesondere bei der Reinigung von Rauchgasen in großen Mengen anfallen, werden z.B. mit Zement und Wasser gebunden.

Der Einsatz von Zement verteuert das entstehende Produkt jedoch, da er als Neu-Produkt teuer eingekauft werden muß. Auch weist das dabei erhaltene Produkt nur relativ geringe mechanische Festigkeiten auf, weshalb es sich nur für bestimmte Anwendungen eignet.

Weiterhin ist es bekannt, partikelförmige Abfälle aus Rauchgasreinigungsanlagen in der Herstellung und Verarbeitung von Gips zu verwenden.

Metallstäube, z.B. Schleifstäube, lassen sich sehr schlecht verwerten. Insbesondere können Metallstäube aufgrund der kleinen Partikelgröße nicht mehr verhüttet werden. Ähnliches gilt für andere Metallabfälle, wie z.B. kleine Metallspäne.

Fasern, wie z.B. Asbestfasern, die als Abfall anfallen, lassen sich nur unter großen Sicherheitsvorkehrungen transportieren und nur zum Teil wiederverwerten.

Papierabfälle, wie z.B. geheime Dokumente, altes aus dem Verkehr gezogenes Papiergeld, Scheckformulare, Wertpapiere od.dgl. sollen in der Regel ohne Transport sofort unbrauchbar gemacht werden. Während solche Papierabfälle früher in der Regel verbrannt wurden, stößt dies wegen der Umweltvorschriften heute oft auf Schwierigkeiten. Auch entstehen dabei aufgrund der speziellen Druckerfarbe giftige Abgase.

Aus den DE-A-2.402.976, DE-A-2.444.420 und DE-A-2.539.195 ist ein Verfahren zum Verwerten von u.a. thermoplastischen Kunststoffabfällen bekannt, die zu einem neuen Material verarbeitet werden sollen.

Diese Kunststoffabfälle werden mit mehr als 50 Gewichtsprozenten Füllstoffen in einem Mischer bei erhöhten Temperaturen gemischt. Bei den Füllstoffen kann es sich um Holzabfälle, Asbest, Torf, Schwefel, Kieselerde, Sand, Graphit, Metallspäne, Asche von Müllverbrennungsanlagen, Abfälle aus wärmeaushärtenden Kunststoffen od.dgl. handeln. Der Kunststoff liegt dabei zerkleinert in Teilchenform vor, damit er in dem Mischer mit den Füllstoffen gemischt werden kann. Beim Vermischen des Kunststoffes mit den anderen Teilen wird dieser durch Wärmezuführung in den plastischen oder flüssigen Zustand übergeführt, die Anteile werden vermischt und unter Druck verbunden.

Dazu werden die gegebenenfalls noch mit einem Überzug versehenen Füllstoffe mit den Kunststoffabfällen in einen Mischer eingebracht, dort je nach Kunststoff bis zu 400 °C aufgewärmt und als quasi homogene Paste aus dem Mischer ausgetragen. Diese Paste kann z.B. auch nach dem Erkalten einem weiteren Verfahrensschritt, wie Extrudieren, Strangpressen, Kalandrieren, Pressen, Spritzguß oder Granulieren, unterworfen werden. Die Umformung des Materials in diesem letzten Verfahrensschritt kann aber auch dann durchgeführt werden, wenn das Material bei erhöhter Temperatur noch eine pastöse Konsistenz aufweist. Dabei kann die Umformung unter geringen Drücken erfolgen. So kann die pastöse Masse durch eine Kalibrierdüse gedrückt und zu einem Strang oder zu einer Platte extrudiert werden.

Um bei diesem Verfahren zu verhindern, daß z.B. die Holzspäne noch Feuchtigkeit aufweisen, wird das Überziehen der Holzspäne in einem Vakuum vorgenommen, d.h., die Späne werden vorgetrocknet, bevor sie mit den Kunststoffabfällen in Kontakt kommen. Auch bei anderen Füllstoffen kann unter einer Gasatmosphäre gearbeitet werden.

Das Material kann mit einem geringen Druck von einigen kg / cm² bis 30 kg / cm² durch Pressen oder durch Spritzguß geformt werden.

Je nach verwendeten Ausgangsmaterialien weist das Material eine Dichte von 0,8 kg / ltr bis 2,5 kg / ltr auf.

Als Mischer kann für dieses bekannte Verfahren ein handelsüblicher Knetmischer oder ein Rührwerk mit einem beheizten Gehäuse verwendet werden.

Auch dieses bekannte Verfahren für die Verwertung von Kunststoffabfällen ist nicht nur maschinen-, sondern auch sehr energie-intensiv, d.h. nicht sehr preiswert.

Aus der EP-A-0.262.083 ist es bekannt, einen festen Brennstoff aus industriellen Produktionsrückständen, die gegebenenfalls vorzerkleinert, miteinander gemischt und zu einem Körper gewünschter Form gepreßt werden, herzustellen, der aus zellulosehaltigem Material, insbesondere Holz und / oder Papier, und Polyethylen besteht. Während des Pressens wird dabei die in dem Gemisch vorhandene Feuchtigkeit verdampft und der Dampf abgeführt.

Vor dem Einbringen des Gemisches in die Schneckenpresse werden metallische Teile aus diesem entfernt.

Dieser Brennstoff besitzt einen hohen Heizwert und aus Transportgründen eine hohe Dichte. Er ist umweltfreundlich und universell einsetzbar und auch bei wechselnden Witterungseinflüssen unbeschränkt lagerfähig.

Aufgrund des beim Pressen in der Schneckenpresse verwendeten und bei diesem Verfahren notwendigen sehr hohen Preßdruckes von maximal 1766 bar ist der Energieaufwand jedoch sehr hoch.

Der Erfindung liegt die Aufgabe zugrunde, ein Verfahren zu schaffen, mit dem partikelförmige Abfälle, wie Stäube, Metallabfälle, Fasern, Papierabfällen od.dgl., billiger gebunden werden können und ein besseres, insbesondere weiterverwendbares Produkt gewonnen werden kann.

Diese Aufgabe wird durch das erfindungsgemäße Verfahren gelöst. Bei dem erfindungsgemäßen Verfahren zum Binden von partikelförmigen Abfällen, wie Stäube, Metallabfälle, Fasern, Papierabfällen od.dgl., zu Feststoffen, werden die partikelförmigen Abfälle mit Kunststoffabfällen in einer Schneckenpresse gemischt, gepreßt und extrudiert, wobei dem Gemisch aus partikelförmigen Abfällen und Kunststoffabfällen Luft zugemischt wird und das Gemisch in der Schneckenpresse solange geknetet wird, bis im wesentlichen die gesamte Luft entfernt ist.

Unter Kunststoffabfällen werden dabei allgemein organische kohlenstoffhaltige Flüssigkeiten oder Feststoffen verstanden. Dies kann fester Kunststoffabfall jeglicher Art, aber auch Lackschlamm oder anderer klebriger, insbesondere organischer Schlamm sein.

Die partikelförmigen Abfälle, Stäube, Metallabfälle, Fasern, Papierabfällen od.dgl., und die Kunststoffabfälle, wie organische kohlenstoffhaltige Flüssigkeiten oder Feststoffe od.dgl., werden in den Einfülltrichter einer Schneckenpresse eingegeben. Die eingegebenen Komponenten werden in der Schneckenpresse durch die umlaufende(n) Schnecke(n) innig gemischt und dabei sehr stark zusammengepreßt. Der Druck in dem Gemisch kann dabei bis zu 100 bar betragen.

Die Luft wird beim Kneten in der Schneckenpresse aus dem Feststoffgemisch herausgedrückt, wodurch die für das Schmelzen der Kunststoffabfälle notwendige Wärme entsteht.

Durch Regelung der Menge an zugegebener Luft kann die Temperatur in der Schneckenpresse entsprechend den verwendeten Kunststoffabfällen einfach gesteuert werden.

Das Gemisch wird in der Schneckenpresse solange geknetet, bis im wesentlichen die gesamte, d.h., sowohl die in den partikelförmigen Abfällen vorhandene, als auch die zusätzlich zugegebene und die beim Befüllen in die Schnekkenpresse gelangte Luft entfernt ist.

Dem Gemisch können in der Schneckenpresse auch Flüssigkeiten, insbesondere eingedickte Abfallflüssigkeiten, beigemischt werden.

So können z.B. schadstoffenthaltende Flüssigkeiten in die Schneckenpresse eingegeben werden. Durch die große Wärme in der Schneckenpresse verdampft die Flüssigkeit, insbesondere Wasser. Die verdampfende Flüssigkeit kann, insbesondere, wenn auch sie schädlich ist, beim Entweichen aus der Schneckenpresse aufgefangen und kondensiert werden. Die Feststoffbestandteile werden in das Gemisch mit eingeknetet.

Es können z.B. 100 ltr Flüssigkeit auf eine Tonne Feststoffgemisch aus partikelförmigen Abfällen und Kunststoffabfällen beigemischt werden.

Gemäß einer Ausführungsform werden als partikelförmige Abfälle Filterstäube aus Rauchgasreinigungsanlagen verwendet. Diese werden in den Kunststoff so eingebunden, daß sie nicht mehr mit der Umwelt in Kontakt kommen. Dabei sollte aber darauf geachtet werden, daß der Kunststoff korrosionsbeständig ist.

Aufgrund des großen Druckes in der Schneckenpresse und der dadurch erzielten Homogenisierung der Mischung reicht es aus, daß der Gewichts-Anteil der Kunststoffabfälle an dem Feststoff-Gemisch bis zu 30 %, insbesondere etwa 15 % beträgt.

Da der Schneckenpresse kein Vormischer od.dgl. vorgeordnet ist, ist es empfehlenswert, daß die Kunststoffabfälle in granulierter Form dem Gemisch beigegeben werden. Das Granulat kann einen Durchmesser von 10 mm bis 40 mm aufweisen. So kann z.B. Folienabfall eine Fläche von 2 mm * 2 mm aufweisen. Dadurch erhält man eine gleichmäßige Mischung in dem aus der Schneckenpresse austretenden Material.

Das aus der Schneckenpresse austretende Produkt, welches in Form von Stangen oder Pellets vorliegen kann, ist bis zu 400 kg / cm² druckbelastbar und weist je nach verwendetem Material eine Dichte bis zu 1,8 kg / ltr und mehr auf. Die Pellets oder Stangen können einen Querschnitt von z.B. 60 * 60 mm² aufweisen.

Diese Pellets oder Stangen können als solche gelagert werden. Sie können aber auch zu größeren Blöcken zusammengefaßt und mit Kunststoff verspritzt werden. Als solche können sie auch z.B. als Baumaterialien verwendet werden.

Insbesondere, dann, wenn diese Pellets oder Stangen auch metallische Materialien enthalten, können diese auch in einem Hüttenwerk verhüttet werden. Aufgrund der dort herrschenden hohen Temperaturen verbrennen die nichtmetallischen Stoffe. Die dabei entstehende Wärme kann für den Verhüttungsprozeß ausgenutzt werden.

Die Schneckenpresse kann z.B. eine Ausbildung aufweisen, wie sie in den WO-A-83/03.999, DE-A-3.714.508, DE-A-3.714. 509 und DE-A-3.714.518, beschrieben sind. Dabei handelt es sich um eine Schneckenpresse mit zwei parallel zueinander angeordneten Schnecken.

Die partikelförmigen Abfälle gelangen z.B. aus einem Vorratsbehälter auf ein Förderband auf dem sie gewogen werden. Abhängig von dem Gewicht dieser Abfälle und dem Dosierungsverhältnis werden dosiert die Kunststoffabfälle auf das Förderband aufgegeben. Beide Abfallarten werden gemeinsam in den Aufnahmetrichter der Schneckenpresse eingeführt.

Falls zusätzlich Flüssigkeiten zugegeben werden, so werden diese getrennt und dosiert in die Schneckenpresse eingeführt.

## Patentansprüche

1. Verfahren zum Binden von partikelförmigen Abfällen, wie stäube, Metallabfälle, Fasern, Papierabfällen, zu Feststoffen, bei dem die partikelförmigen Abfälle mit Kunststoffabfällen in einer Schneckenpresse gemischt, geknetet und extrudiert werden, wobei dem Gemisch aus partikelförmigen Abfällen und Kunststoffabfällen Luft zugemischt wird und das Gemisch in der Schneckenpresse solange geknetet wird, bis im wesentlichen die gesamte Luft entfernt ist.

2. Verfahren nach Anspruch 1, dadurch gekennzeichnet, daß der Druck in dem Gemisch bis zu 100 bar beträgt.

3. Verfahren nach einem der vorhergehenden Ansprüche, dadurch gekennzeichnet, daß dem Gemisch Flüssigkeiten, insbesondere eingedickte Abfallflüssigkeiten, beigemischt werden.

4. Verfahren nach einem der vorhergehenden Ansprüche, dadurch gekennzeichnet, daß als partikelförmige Abfälle Filterstäube aus Rauchgasreinigungsanlagen, Metallstäube, Metallspäne, Asbestfasern, Papierdokumente verwendet werden.

5. Verfahren nach einem der vorhergehenden Ansprüche, dadurch gekennzeichnet, daß der Gewichts-Anteil der Kunststoffabfälle an dem Feststoff-Gemisch bis zu 30 %, insbesondere etwa 15 % beträgt.

6. Verfahren nach einem der vorhergehenden Ansprüche, dadurch gekennzeichnet, daß die Kunststoffabfälle in granulierter Form dem Gemisch beigegeben werden.

7. Verfahren nach einem der vorhergehenden Ansprüche, dadurch gekennzeichnet, daß das erhaltene weiterverarbeitbare Produkt in Form von Pellets oder Stangen aus der Schneckenpresse austritt.

## Claims

1. Process for binding together particulate waste, such as dust, metal waste, fibres, waste paper, to form solid bodies in which particulate waste is mixed with plastics waste in a screw press, kneaded and extruded, air being added to the mixture of particulate waste and plastics waste and the mixture being kneaded in the screw press until substantially all the air is removed.

2. Process according to claim 1 characterised in that the pressure in the mixture amounts to up to 100 bar.

3. Process according to one of the foregoing claims characterised in that liquids, in particular thickened waste liquids, are added into the mixture.

4. Process according to one of the foregoing claims characterised in that dust from the filters of flue gas cleaning installations, metallic dust, metal swarf, asbestos fibres, paper documents are used as the particulate waste.

5. Process according to one of the foregoing claims characterised in that the proportion by weight of plastics waste in the mixture of solids amounts to up to 30%, in particular about 15%.

6. Process according to one of the foregoing claims characterised in that the plastics waste is added to the mixture in granulated form.

7. Process according to one of the foregoing claims characterised in that the product obtained and capable of further use emerges from the screw press in the form of pellets or strands.

## Revendications

1. Procédé pour lier des déchets particulaires, tels que poussières, déchets de métaux, fibres, déchets de papier, en matières solides, dans lequel les déchets particulaires sont mélangés avec des déchets de matière plastique dans une presse à vis, malaxés et extrudés, au mélange de déchets particulaires et de déchets de matière plastique étant ajouté de l'air et le mélange étant malaxé dans la presse à vis jusqu'à ce que sensiblement tout l'air soit éliminé.

2. Procédé suivant la revendication 1, caractérisé en ce que la pression dans le mélange est de jusqu'à 100 bars.

3. Procédé suivant l'une des revendications précédentes, caractérisé en ce qu'au mélange sont ajoutés des liquides, en particulier des déchets liquides épaissis.

4. Procédé suivant l'une des revendications précédentes, caractérisé en ce qu'il est utilisé, comme déchets particulaires, des poussières de filtration d'installations d'épuration de gaz de fumée, des poussières de métaux, copeaux de métaux, fibres d'amiante, documents en papier.

5. Procédé suivant l'une des revendications précédentes, caractérisé en ce que la proportion en poids des déchets de matière plastique dans le mélange solide est de jusqu'à 30%, en particulier d'environ 15%.

6. Procédé suivant l'une des revendications précédentes, caractérisé en ce que les déchets de matière plastique sont ajoutés au mélange sous forme de granulés.

7. Procédé suivant l'une des revendications précédentes, caractérisé en ce que le produit transformable obtenu sort de la presse à vis sous forme de boulettes ou de barres.
